(19) Europäisches Patentamt
European Patent Office
Office européen des brevets

(11) EP 3 723 265 A1

(12) EUROPEAN PATENT APPLICATION

(43) Date of publication:
14.10.2020 Bulletin 2020/42

(51) Int Cl.:
H02M 7/493 (2007.01)    H02P 25/22 (2006.01)
H02M 7/487 (2007.01)    H02M 1/12 (2006.01)

(21) Application number: 19212431.1

(22) Date of filing: 29.11.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.04.2019 US 201916381366

(71) Applicant: Hamilton Sundstrand Corporation
Charlotte, NC 28217-4578 (US)

(72) Inventors:
• XING, Lei
  South Windsor, CT Connecticut 06074 (US)
• WU, Xin
  Glastonbury, CT Connecticut 06033 (US)

(74) Representative: Dehns
St. Bride's House
10 Salisbury Square
London EC4Y 8JD (GB)

(54) **DC BUS CAPACITOR BALANCING FOR THREE-LEVEL, SIX-PHASE VOLTAGE SOURCE CONVERTERS**

(57) Provided are embodiments including a system for balancing DC bus capacitors for converters. The system can include a first 3-phase system, and a second 3-phase system, wherein the first 3-phase system and the second 3-phase system are operably connected. The system can also include one or more DC capacitors coupled to the first 3-phase system and the second 3-phase system, and a controller, wherein the controller is configured to control switching of the first 3-phase system and the second 3-phase system so that an output of second 3-phase system is delayed 60 degrees from an output of the first 3-phase system. Also, embodiments are provided for a method for balancing DC bus capacitors.

FIG. 1

EP 3 723 265 A1

**Description**

BACKGROUND

The subject matter disclosed herein relates generally to power systems, and, more particularly, to direct current (DC) bus capacitor balancing for three-level, six-phase voltage source converters.

Converters are employed in a variety of applications to convert direct current (DC) power to alternating current (AC) power and vice versa. A converter for DC-to-AC conversion is referred to as an inverter, while an AC-to-DC converter is referred to as a rectifier. Employing active components, such as transistors, allows for regulation of the voltages generated by the converter. Multi-level converters are used in a wide variety of power applications. For example, converters are used in power supplies and variable speed drives. Three-level converters are often selected for their improved AC current waveform and high power density.

BRIEF DESCRIPTION

According to an embodiment, a system for balancing DC bus capacitors for converters is provided. The system includes a first 3-phase system, a second 3-phase system, wherein the first 3-phase system and the second 3-phase system are operably connected, one or more DC capacitors coupled to the first 3-phase system and the second 3-phase system, and a controller, wherein the controller is configured to control switching of the first 3-phase system and the second 3-phase system so that an output of second 3-phase system is delayed 60 degrees from an output of the first 3-phase system.

In addition to one or more of the features described herein, or as an alternative, further embodiments include a first 3-phase system and a second 3-phase system that operate as a 6-phase converter.

In addition to one or more of the features described herein, or as an alternative, further embodiments include one or more DC capacitors that are coupled to a floating midpoint.

In addition to one or more of the features described herein, or as an alternative, further embodiments include one or more DC capacitors that are coupled to a grounded midpoint.

In addition to one or more of the features described herein, or as an alternative, further embodiments include a voltage across the one or more DC capacitors that are charged and discharged to an equal magnitude during operation.

In addition to one or more of the features described herein, or as an alternative, further embodiments include a midpoint current from the midpoint of one or more DC capacitors that are equal.

In addition to one or more of the features described herein, or as an alternative, further embodiments include a filter for each phase of the first 3-phase system and the second 3-phase system.

In addition to one or more of the features described herein, or as an alternative, further embodiments include one or more DC capacitors charging cycle and discharge cycle are controlled by the controller.

According to an embodiment, a method for balancing DC bus capacitors for converters is provided. The method includes operating a first 3-phase system, operating a second 3-phase system, wherein the first 3-phase system and the second 3-phase system are operably connected, charging and discharging one or more DC capacitors coupled to the first 3-phase system and the second 3-phase system, and balancing charging and discharging of the one or more DC capacitors by controlling switching of the first 3-phase system and the second 3-phase system so that an output of second 3-phase system is delayed 60 degrees from an output of the first 3-phase system.

In addition to one or more of the features described herein, or as an alternative, further embodiments include operating the first 3-phase system and the second 3-phase system as a 6-phase converter.

In addition to one or more of the features described herein, or as an alternative, further embodiments include one or more DC capacitors that are coupled to a floating midpoint.

In addition to one or more of the features described herein, or as an alternative, further embodiments include one or more DC capacitors that are coupled to a grounded midpoint.

In addition to one or more of the features described herein, or as an alternative, further embodiments include charging and discharging the one or more DC capacitors to a voltage equal magnitude during operation.

In addition to one or more of the features described herein, or as an alternative, further embodiments include a midpoint current from the midpoint of the one or more DC capacitors that are equal.

In addition to one or more of the features described herein, or as an alternative, further embodiments include filtering each phase of the first 3-phase system and the second 3-phase system.

In addition to one or more of the features described herein, or as an alternative, further embodiments include controlling a charging cycle and discharge cycle of the one or more DC capacitors.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION OF THE DRAWINGS

The following descriptions should not be considered limiting in any way. With reference to the accompanying drawings, like elements are numbered alike:

FIG. 1 depicts a block diagram of a system including a three-level, 6-phase converter in accordance with one or more embodiments;

FIG. 2 depicts a single phase leg of the 3-phase system having a grounded midpoint is shown;

FIG. 3 depicts a waveform representing the overall current measured for a single phase system;

FIG. 4 depicts a waveform illustrating a voltage plot for each phase of the 6-phase system in accordance with one or more embodiments;

FIG. 5 depicts a waveform that combines the overall current represented by the first 3-phase system and the second 3-phase system in accordance with one or more embodiments; and

FIG. 6 depicts a flowchart of a method for balancing a DC capacitor for a three-level, 6-phase system in accordance with one or more embodiments.

DETAILED DESCRIPTION

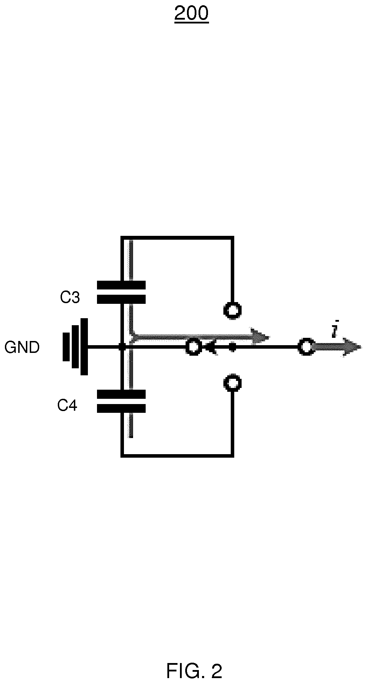

DC bus capacitors are used to couple the output of three-level converters to a DC bus. However, oftentimes distortion occurs at the output which may require filtering. Unbalanced DC bus capacitors can also be a source for a distorted output as the mid-point current which charges and discharges the two capacitors are discharging at different levels. Without any balancing control, the mid-point voltage will fluctuate causing a distorted output current. One type of conventional balancing scheme includes injecting a common mode voltage to the output voltage. However, this can increase the output common mode noise and further increase the converter weight. Other conventional methods can induce more switching, which may increase switching loss by 30% to 60% which can be a burden to the cooling system.
It is important the output has minimal distortion so that the connected devices, equipment, and systems can use the generated power without causing any damage. For example, the unbalanced capacitors can lead to increased voltage and current stress of the DC capacitors, increased losses in the capacitors, and reduced life of the capacitors. The techniques described herein provide for DC capacitor balancing to improve the output performance of the three-level, six-phase converters.

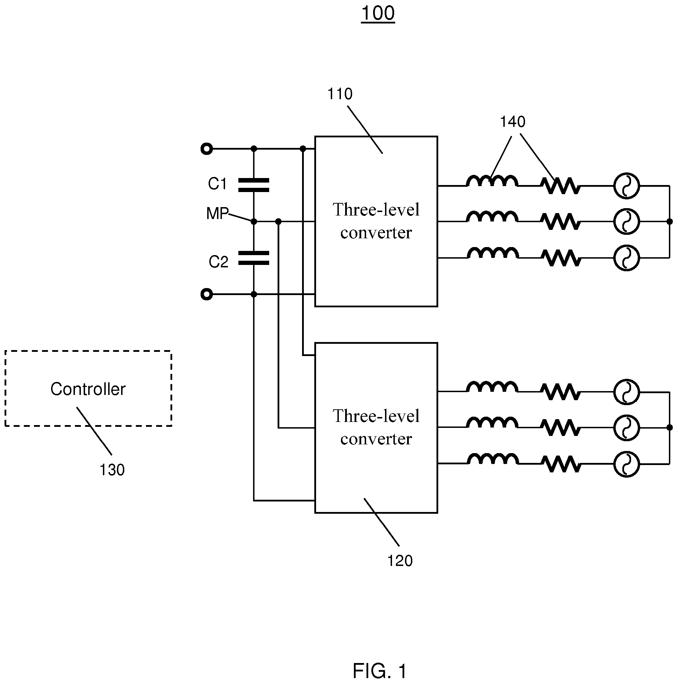

FIG. 1 depicts a block diagram of a system 100 including a first three-level converter 110 and a second three-level converter 120 in accordance with one or more embodiments. As shown in FIG. 1, a first capacitor C1 is coupled to a first power supply rail and a middle point (MP), and a second capacitor C2 is coupled to a second power supply rail and the MP. The output of each of the three-level converters 110, 120 includes components 140 to filter the signal such as inductors, resistors, and/or capacitors.
The switches (not shown) included in each three-level converter 110 and 120 can include any type of switch and any configuration that is under the control of the controller 130. For example, the switches can include semiconductor switches such as MOSFETs or other transistors such as insulated-gate bipolar transistors (IGBT).
Now referring to FIG. 2, a single phase leg of a convention 3-phase system is shown. The current i is shown where the midpoint is grounded. The midpoint current is produced as the capacitors C3 and C4 are charged and discharged. The unbalanced charging and discharging can lead to distortion at the output of the system.

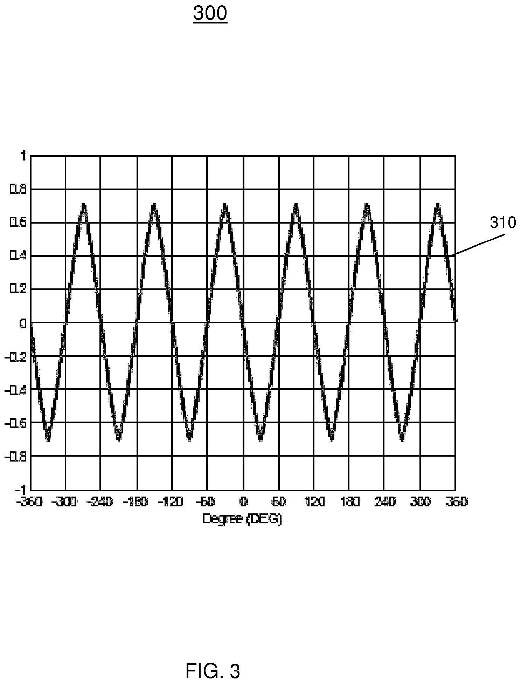

FIG. 3 illustrates a waveform for a 3-phase system. The overall mid-point in two cycles is shown from -360 degrees to 360 degrees. The current i fluctuates between 0.7 and -0.7 amps over the range which can lead to an imbalance in the DC capacitors. There is no control shown for the mid-point current.
The techniques described herein balance the DC capacitors for a 6-phase system 100 by inserting a 60 degree phase shift between the two sets of three-phase systems. The phase shift can make sure the mid-point currents provided by each set of the three-phase system cancel each other out. Consider the following Equations 1, 2, and 3:

$$\begin{cases} v_{a1} = V\cos\omega t \\ v_{b1} = V\cos(\omega t - \frac{2\pi}{3}) \\ v_{c1} = V\cos\left(\omega t + \frac{2\pi}{3}\right) \\ v_{a2} = V\cos\left(\omega t - \frac{\pi}{3}\right) \\ v_{b2} = V\cos\left(\omega t - \frac{\pi}{3} - \frac{2\pi}{3}\right) \\ v_{c2} = V\cos\left(\omega t - \frac{\pi}{3} + \frac{2\pi}{3}\right) \end{cases} \qquad \text{(Eq. 1)}$$

and

$$\begin{cases} i_{a1} = I\cos(\omega t - \varphi) \\ i_{b1} = I\cos\left(\omega t - \frac{2\pi}{3} - \varphi\right) \\ i_{c1} = I\cos\left(\omega t + \frac{2\pi}{3} - \varphi\right) \\ i_{a2} = I\cos\left(\omega t - \frac{\pi}{3} - \varphi\right) \\ i_{b2} = I\cos\left(\omega t - \frac{\pi}{3} - \frac{2\pi}{3} - \varphi\right) \\ i_{c2} = I\cos\left(\omega t - \frac{\pi}{3} + \frac{2\pi}{3} - \varphi\right) \end{cases} \qquad \text{(Eq. 2)}$$

where $\varphi$ is the power factor angle and does not affect the result in this example. The overall mid-point current can be calculated as follows in Equation 3:

$$i_{mid} = \sum(1 - |v_x|)i_x, \mathrm{i} = \mathrm{a}1, \mathrm{b}1, \mathrm{c}1, \mathrm{a}2, \mathrm{b}2, \mathrm{c}2 \qquad \text{(Eq. 3)}$$

According to the Equation 3, the midpoint current $i_{mid}$ is approximately zero if the phase shift between a1 and a2 is 60 degrees which is illustrated in FIG. 3. This illustrates that the three-level, 6-phase converter 100 does not have any balancing issues, and it can be applied to a variety of different load cases. There is no addition common mode injector or additional switching that is required.

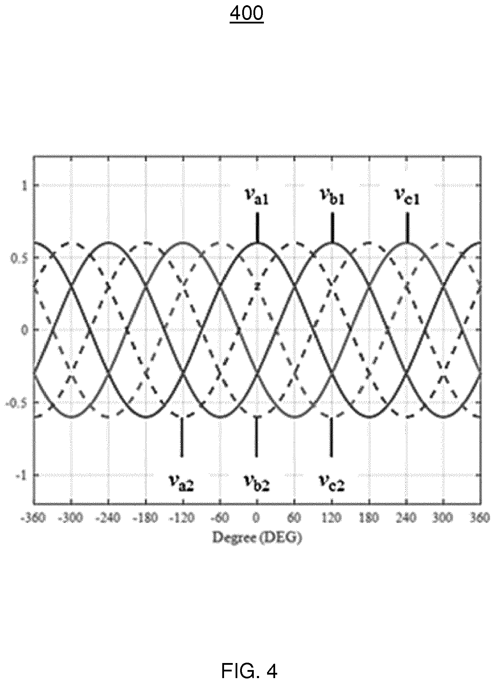

FIG. 4 depicts the waveform 400 for two three-level converters such as that shown in FIG. 1. The two three-level converters are phase-shifted 60 degrees from one another to achieve the reduced distortion. The waveforms associated with a first three-level converter 110 can include waveforms Va1, Vb1, and Vc1 (shown in solid lines), and the waveforms associated with a second three-level converter 120 can include waveforms Va2, Vb2, and Vc2 (shown in dotted lines).

Due to the phase-shift between the first three-phase system and the second three-phase system the overall imbalance between the two systems are canceled. This helps to balance the DC capacitors and additionally reduces the distortion experienced at the output of the system.

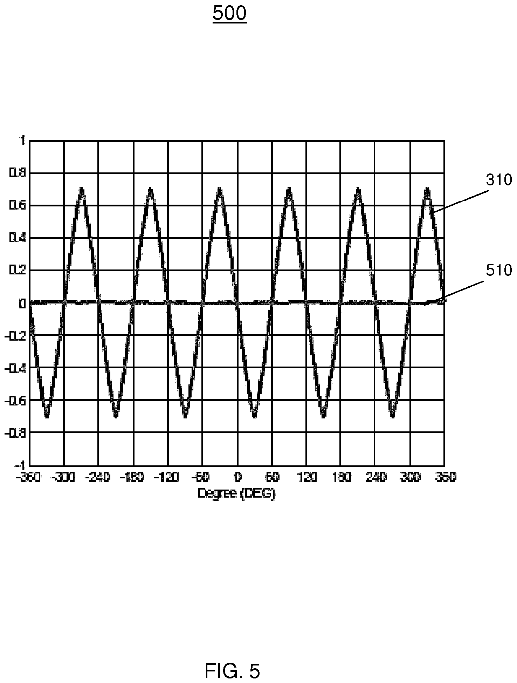

As shown in FIG. 5, the waveform 310 representing the overall waveform for a first single three-phase system and the combined waveform 510 for the first three-phase system and a second three-phase system where the second three-phase system is phase-shifted by 60 degrees by the controller 130 are shown. If a second waveform (not shown) similar to the waveform 310 is overlaid on the graph and is offset by 60 degrees, the resulting waveform 510 would result. The embodiments include a controller configured to controller the switching of the first three-phase system and the second three-phase system to achieve a 60 degree offset which balances the DC capacitors C1 and C2. The controller 130 generates the phase information for the six voltages shown in FIG. 4. The controller 130 is configured to generate 60 degrees between the voltages (Va1, Vb1, and Vc1) of a first system and the voltages (Va2, Vb2 and Vc2) of a second system.

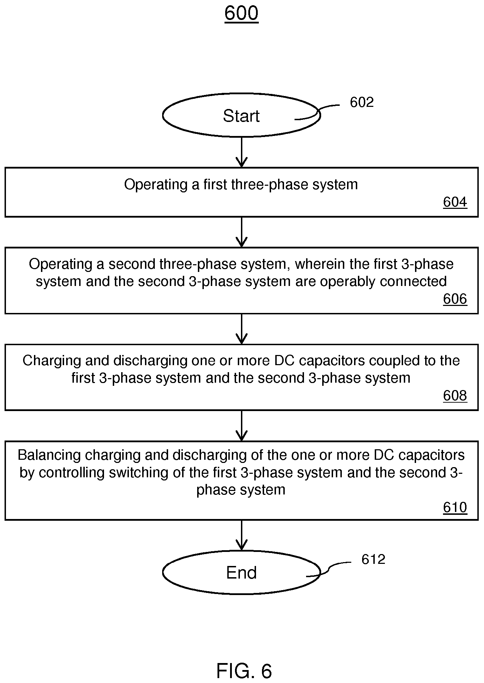

FIG. 6 depicts a flowchart of a method 600 for balancing DC capacitors for a six-phase converter system in accordance with one or more embodiments. The method 600 begins at block 602 and continues to block 604 which includes operating a first 3-phase system. The method 600 at block 606 provides for operating a second 3-phase system, wherein the first 3-phase system and the second 3-phase system are operably connected. In one or more embodiments, a controller controls the switching of switching device within each 3-phase system to generate a controlled AC signal that is to be provided to the system. The two 3-phase systems operate as a 6-phase converter to produce a controlled AC signal. At block 600 the charging and discharging of one or more DC capacitors coupled to the first 3-phase system and the second 3-phase system is controlled, and at block 610 a controller balances the charging and discharging of the one or more DC capacitors by controlling the switching of the first 3-phase system and the second 3-phase system. The balancing is achieved by implementing a 60 degree offset between the first 3-phase system and the second 3-phase system which cancels the noise or distortion produced from each 3-phase system. By canceling the noise and distortion high quality power can be provided to other systems for use. The method 600 ends at block 612.

The technical effects and benefits provide a simplified architecture for balancing the DC link capacitors to remove the distortion from the output power. Therefore, no common mode injector or additional switching other than that required for regular operation is needed.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

**Claims**

1. A system (100) for balancing DC bus capacitors for converters, the system comprising:

   a first 3-phase system;
   a second 3-phase system, wherein the first 3-phase system and the second 3-phase system are operably connected;
   one or more DC capacitors coupled to the first 3-phase system and the second 3-phase system; and
   a controller, wherein the controller is configured to control switching of the first 3-phase system and the second 3-phase system so that an output of second 3-phase system is delayed 60 degrees from an output of the first 3-phase system.

2. The system of claim 1, wherein the first 3-phase system and the second 3-phase system operate as a 6-phase converter.

3. The system of claim 1 or 2, wherein the one or more DC capacitors are coupled to a floating midpoint.

4. The system of claim 1 or 2, wherein the one or more DC capacitors are coupled to a grounded midpoint.

5. The system of any preceding claim, wherein a voltage across the one or more DC capacitors are charged and discharged to an equal magnitude during operation.

6. The system of any preceding claim, wherein a midpoint current from the midpoint of one or more DC capacitors are equal.

7. The system of any preceding claim, further comprising a filter for each phase of the first 3-phase system and the second 3-phase system.

8. The system of any preceding claim, wherein the one or more DC capacitors charging cycle and discharge cycle are controlled by the controller.

9. A method for balancing DC bus capacitors for converters, the method comprising:

operating a first 3-phase system;
operating a second 3-phase system, wherein the first 3-phase system and the second 3-phase system are operably connected;
charging and discharging one or more DC capacitors coupled to the first 3-phase system and the second 3-phase system; and
balancing charging and discharging of the one or more DC capacitors by controlling switching of the first 3-phase system and the second 3-phase system so that an output of second 3-phase system is delayed 60 degrees from an output of the first 3-phase system.

10. The method of claim 9, further comprising operating the first 3-phase system and the second 3-phase system as a 6-phase converter.

11. The method of claim 9 or 10, wherein the one or more DC capacitors are coupled to a floating midpoint, or wherein the one or more DC capacitors are coupled to a grounded midpoint.

12. The method of any of claims 9 to 11, further comprising charging and discharging the one or more DC capacitors to a voltage equal magnitude during operation.

13. The method of any of claims 9 to 12, wherein a midpoint current from the midpoint of the one or more DC capacitors are equal.

14. The method of any of claims 9 to 13, further filtering each phase of the first 3-phase system and the second 3-phase system.

15. The method of any of claims 9 to 14, further comprising controlling a charging cycle and discharge cycle of the one or more DC capacitors.

FIG. 1

200

FIG. 2

EP 3 723 265 A1

FIG. 3

400

FIG. 4

FIG. 5

EP 3 723 265 A1

## 600

```
          ( Start ) —— 602
              │
              ▼
┌─────────────────────────────────────┐
│   Operating a first three-phase system   │
│                              604     │
└─────────────────────────────────────┘
              │
              ▼
┌─────────────────────────────────────┐
│  Operating a second three-phase system, wherein the first 3-phase  │
│  system and the second 3-phase system are operably connected  │
│                              606     │
└─────────────────────────────────────┘
              │
              ▼
┌─────────────────────────────────────┐
│  Charging and discharging one or more DC capacitors coupled to the  │
│   first 3-phase system and the second 3-phase system  │
│                              608     │
└─────────────────────────────────────┘
              │
              ▼
┌─────────────────────────────────────┐
│  Balancing charging and discharging of the one or more DC capacitors  │
│  by controlling switching of the first 3-phase system and the second 3-  │
│                 phase system         │
│                              610     │
└─────────────────────────────────────┘
              │
              ▼
          ( End ) —— 612
```

FIG. 6

EP 3 723 265 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H03 15273 A (HITACHI LTD) 23 January 1991 (1991-01-23) * abstract * * * figures 3,4 * | 1-15 | INV. H02M7/493 H02P25/22 H02M7/487 |
| A | WO 2014/207858 A1 (HITACHI LTD [JP]) 31 December 2014 (2014-12-31) * abstract * * | 1-15 | ADD. H02M1/12 |
| X | US 2009/128076 A1 (TANIGUCHI MAKOTO [JP]) 21 May 2009 (2009-05-21) * paragraphs [0137], [0146]; figures 1,5 * | 1-15 | |

TECHNICAL FIELDS
SEARCHED      (IPC)

H02M
H02P

The present search report has been drawn up for all claims

| Place of search | Date of completion of the search | Examiner |
|---|---|---|
| The Hague | 11 June 2020 | Standaert, Frans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 19 21 2431

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2020

| Patent document cited in search report | | Publication date | Patent family member(s) | | Publication date |
|---|---|---|---|---|---|
| JP H0315273 | A | 23-01-1991 | JP | 2821181 B2 | 05-11-1998 |
| | | | JP | H0315273 A | 23-01-1991 |
| WO 2014207858 | A1 | 31-12-2014 | JP WO2014207858 A1 | | 23-02-2017 |
| | | | WO | 2014207858 A1 | 31-12-2014 |
| US 2009128076 | A1 | 21-05-2009 | JP | 4380755 B2 | 09-12-2009 |
| | | | JP | 2009095169 A | 30-04-2009 |
| | | | US | 2009128076 A1 | 21-05-2009 |

For more details about this annex : see Official Journal of the European Patent Office, No. 12/82